# EUROPEAN PATENT SPECIFICATION

(11) **EP 2 794 795 B1**
(45) Date of publication and mention of the grant of the patent: **30.05.2018**
(21) Application number: 12859413.2
(22) Date of filing: 13.12.2012
(51) Int. Cl.: C09J 123/00, C09J 11/00, C09J 7/02, C08K 5/01, C09J 133/10, C09J 153/00, C08L 9/06, C08L 23/14, C08L 53/00

(54) **OLEFIN BLOCK COPOLYMER BASED PRESSURE SENSITIVE ADHESIVES**
DRUCKEMPFINDLICHE KLEBSTOFFE AUF BASIS VON OLEFIN-BLOCKCOPOLYMEREN
ADHÉSIFS SENSIBLES À LA PRESSION À BASE DE COPOLYMÈRE À BLOCS OLÉFINIQUE

(30) Priority: 22.12.2011 US 201161579302 P
(43) Date of publication of application: 29.10.2014
(73) Proprietor: 3M Innovative Properties Company, St. Paul, MN 55133-3427 (US)
(72) Inventor: WANG, Shujun J., Saint Paul, Minnesota 55133-3427 (US); SETH, Jayshree, Saint Paul, Minnesota 55133-3427 (US); MA, Jingjing, Saint Paul, Minnesota 55133-3427 (US); WOLTERS, Mark A., Saint Paul, Minnesota 55133-3427 (US); BHARTI, Vivek, Saint Paul, Minnesota 55133-3427 (US); BANY, Stephen W., Saint Paul, Minnesota 55133-3427 (US)
(74) Representative: Herzog, Fiesser & Partner Patentanwälte PartG mbB
(86) International application number: PCT/US2012/069361
(87) International publication number: WO 2013/096068

(56) References cited:
- WO-A1-2011/017298
- KR-A- 20070 031 344
- KR-A- 20100 111 274
- KR-A- 20100 134 800
- US-A1- 2007 172 649
- US-A1- 2011 021 103
- US-A1- 2011 021 103

## Description

### Field of the Disclosure

This disclosure relates generally to pressure sensitive adhesive compositions that contain olefin block copolymers.

### Background

Adhesives have been used for a variety of marking, holding, protecting, sealing and masking purposes. Adhesive tapes generally comprise a backing, or substrate, and an adhesive. One type of adhesive, a pressure sensitive adhesive, is particularly useful for many applications. Other types of useful adhesives include hot melt adhesives that are solids at room temperature, but become tacky and flowable at elevated temperatures, and then re-solidify upon cooling.

Pressure sensitive adhesives are well known to one of ordinary skill in the art to possess certain properties at room temperature including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are natural rubber, synthetic rubbers (e.g., styrene/butadiene copolymers (SBR) and styrene/isoprene/styrene (SIS) block copolymers), various (meth)acrylate (e.g., acrylate and methacrylate) copolymers and silicones. Each of these classes of materials has advantages and disadvantages.

In PCT Publication WO 2009/029476 (Dow Global Technologies, Inc.), adhesive compositions are described that comprise: (i) at least one ethylene/alpha-olefin interpolymer; (ii) at least one tackifier; and (iii) an oil or a low molecular weight polymer.

PCT Publication WO 2009/133175 (TESA SE) describes an adhesive tape comprising a support and an adhesive substance that is applied to at least one side of support. The adhesive substance comprises an olefin polymer having a density ranging from 0.86 to 0.89 g/cm³ and a minimum crystalline melting point of 105°C, and comprises a tackifier resin. The olefin polymer comprises ethylene or propylene and at least one further comonomer selected from the C2 to C10 olefins. It can be a block copolymer, a graft polymer or a heterophasic polymer based on polypropylene.

PCT Publication WO 2010/026172 (HENKEL AG & CO KGAA) describes a hot melt spray adhesive comprising from 5 to 40 % of at least one copolymer based on ethylene and at least one C3 to C20 alpha-olefin, catalyzed by metallocene polymerization, 10 to 65% of at least one tackifying resin, 0 to 35 % of a plasticizer, and from 0.01 to 30 % additives.

PCT Publication WO 2011/011729 (BOSTIK INC) describes a hot melt adhesive comprising a blend of components including about 5-50% by weight of an olefin block copolymer; about 10-70% by weight of a first tackifying resin; about 0-65% by weight of a second tackifying resin that is different than the first tackifying resin; about 0-60% by weight of a plasticizer; about 0-20% by weight of an aromatic reinforcing resin; about 0.1-5% by weight of a stabilizer; and about 1-40% by weight of a secondary polymer. The viscosity of the hot melt adhesive composition is equal to or less than about 20,000 mPa*s at 163°C.

### Summary

Disclosed herein are pressure sensitive adhesives and articles that contain pressure sensitive adhesives. The pressure sensitive adhesives are hot melt processable composition blends. Some embodiments of the composition blends comprise at least one olefinic block copolymer, at least one elastomeric polymer, and at least one tackifying resin. In some embodiments, the composition blend comprises 10-70% by weight olefinic block copolymer, 1-70% by weight elastomeric polymer, and 10-70% by weight tackifying resin. The composition blend may comprise additional components, such as for example, at least one plasticizer.

Also disclosed are adhesive articles. In some embodiments, the article comprises a substrate with a first surface and a second surface, and a hot melt processable pressure sensitive adhesive blend composition disposed on at least a portion of the first surface of the substrate. A wide variety of substrates may be used. In some embodiments, the substrate comprises a tape backing and the article comprises a tape. Some embodiments of these tape articles have high adhesion to low surface energy substrates such as polypropylene as evidenced by the tape having a room temperature peel adhesion as measured using a modified version of ASTM Test Method D 3330-90 with a polypropylene substrate, of at least 10 Newtons/decimeter.

### Detailed Description

Many classes of pressure sensitive adhesives are provided as solutions, often solutions containing large amounts of solvents. Upon coating or dispensing, the solvent needs to be removed to produce an adhesive layer. Often the solvent is removed through the use of elevated temperature processing such as heating with an oven. Such solvent removal steps can add cost to the formed articles because solvent removal requires additional steps. Not only are additional steps involved, often these steps require specialized care, precautions and equipment because the solvents are volatile and generally flammable. In addition, shipment of adhesive solutions adds additional expense because of the added weight of solvent and may require special shipment precautions due to the presence of solvent. Environmental concerns are also an issue with solvent borne adhesive systems, since, even with the use of solvent reclamation equipment, solvent release to the environment is likely.

Therefore, 100% solids adhesive systems have been developed. Among these 100% solids systems are hot melt processable adhesives, including hot melt processable pressure sensitive adhesives. Difficulties have arisen when solvent processing has been replaced by hot melt processing. Often it is difficult to replicate the properties of solvent delivered adhesive layers with hot melt delivered systems. In particular, because the adhesive must pass through the extruder or other hot melt processing equipment, the melt viscosity and the molecular weight of polymers that can be used is restricted. For example, it can be difficult to produce adhesives with high shear properties due to the molecular weight restrictions of hot melt processing.

Therefore, the need remains for new pressure sensitive adhesives that are hot melt processable. Disclosed herein are composition blends comprising at least one olefinic block copolymer. Block copolymers are polymers that have the general structure AB, ABA, or (AB)ₙ where the A blocks are thermoplastic "hard" blocks and the B blocks are elastomeric "soft" blocks. At room temperature, the hard blocks coalesce to form physical crosslinks. However, upon heating the physical crosslinks dissolve and the polymer becomes flowable. Upon cooling, the physical crosslinks re-form. This gives block copolymers the desirable properties of hot melt processability and yet high room temperature cohesive strength. The disclosed composition blends comprise, besides the at least one olefinic block copolymer, at least one elastomeric polymer, and at least one tackifying resin. The blend comprises a hot melt processable pressure sensitive adhesive. These pressure sensitive adhesives can be used to prepare articles, such as tapes.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. For example, reference to "a layer" encompasses embodiments having one, two or more layers. As used in this specification and the appended claims, the term "or" is generally employed in its sense including "and/or" unless the content clearly dictates otherwise.

The term "adhesive" as used herein refers to polymeric compositions useful to adhere together two adherends. Examples of adhesives are pressure sensitive adhesives.

Pressure sensitive adhesive compositions are well known to those of ordinary skill in the art to possess properties including the following: (1) aggressive and permanent tack, (2) adherence with no more than finger pressure, (3) sufficient ability to hold onto an adherend, and (4) sufficient cohesive strength to be cleanly removable from the adherend. Materials that have been found to function well as pressure sensitive adhesives are polymers designed and formulated to exhibit the requisite viscoelastic properties resulting in a desired balance of tack, peel adhesion, and shear holding power. Obtaining the proper balance of properties is not a simple process.

As used herein, the term "hot melt processable" means that the material is capable of being hot melt processed without significant degradation.

As used herein, the terms "weight %" and "% by weight" are used interchangeably and refer to the number of parts by weight of a component per 100 total parts of the composition.

The terms "glass transition temperature" and "Tg" are used interchangeable and refer to the glass transition temperature of a material or a mixture. Unless otherwise indicated, glass transition temperature values are determined by Differential Scanning Calorimetry (DSC).

The term "storage modulus" as used herein, has its typical materials science meaning for materials and mixtures, and refers to the storage modulus value determined by Dynamical Mechanical Analysis (DMA) techniques unless otherwise indicated.

Composition blends of this disclosure comprise at least one olefinic block copolymer, at least one elastomeric polymer, and at least one tackifying resin. The blend comprises a hot melt processable pressure sensitive adhesive. The blend may also comprise additional optional additives.

In some embodiments, the composition blend comprises 10-70% by weight olefinic block copolymer, 1-70% by weight elastomeric polymer, and 10-70% by weight tackifying resin.

Olefinic block copolymers are desirable for use in hot melt processable pressure sensitive adhesives for a variety of reasons. Not only do these materials have the desirable properties of block copolymers described above, but also have other desirable properties such as good adhesion to low surface energy substrates, and are derived from readily available starting materials such as ethylene and alpha-olefins. The desirable block copolymer features present in these materials are physical crosslinks that are present at room temperature and slightly elevated temperatures to give good cohesive strength to the polymer but readily melt at hot melt processing temperatures to permit hot melt blending and coating.

Adhesion to low surface energy substrates is becoming increasing important as more and more low surface energy materials, such as plastics, are incorporated into articles and have low surface energy surfaces to which adhesives and adhesive articles (such as tapes) are asked to adhere. Many of these low surface energy materials are olefins or olefin-based and therefore the olefinic block copolymers have a high affinity for these materials and provide good adhesion to these surfaces.

However, the olefinic block copolymer materials, as a class, tend to have relative high storage plateau moduli as compared to, for example, styrene-isoprene-styrene block copolymers that have found much use as pressure sensitive adhesives. This high storage plateau modulus can be compensated for by the addition of high levels of additives such as tackifiers and plasticizers, but the addition of high levels of such additives can adversely affect the pressure sensitive adhesive properties. In particular, high levels of such additives can cause shocky peel and a decrease in the cohesive strength of the pressure sensitive adhesive. Smooth peel, rather than shocky peel is generally desired for pressure sensitive adhesives because shocky peel is inconsistent, at some points the peel force is very high and others very low. Decreases in cohesive strength are also undesirable because, as described above, the decreased cohesive strength results in lower shear strength.

In this disclosure, composition blends have been prepared that are able to compensate for the relatively high storage plateau moduli of the olefinic block copolymer materials without losing the desirable pressure sensitive adhesive properties, namely high adhesion to low surface energy substrates, smooth rather than shocky peel and high cohesive strength as reflected in, for example, shear holding power.

A wide variety of olefinic block copolymer materials are suitable for use in the composition blends of this disclosure. Particularly suitable are olefinic block copolymers that comprise at least one crystalline ethylene hard block and at least one soft block comprising at least one C₃-C₂₀ alpha-olefin. Generally, the suitable olefinic block copolymers are ones in which the at least one crystalline ethylene hard block comprises less than 30% by weight of the olefinic block copolymer. In some embodiments, the at least one crystalline ethylene hard block comprises less than 15% by weight of the olefinic block copolymer.

In some embodiments, the olefinic block copolymer has a density of less than 0.90 g/cm³ (grams per cubic centimeter), and a melt temperature of from about 100°C to about 120°C. In some embodiments, the melt temperature is from about 110°C to about 120°C. It has been found that olefinic block copolymers with these parameters are particularly suitable for both hot melt processing as well as good pressure sensitive adhesive properties.

Examples of suitable olefinic block copolymer materials are described in PCT Patent Publication No. WO 2009/029476 (Dow Global Technologies, Inc.) and are prepared using the INSITE catalyst "chain shuttling technology" as described, for example in PCT Patent Publication Nos. WO 2005/090427, WO 2005/090426, and WO 2005/090425, and US Patent Publication No 2006/199939. Particularly suitable are those polymers commercially available from DOW Chemical Company, Midland, MI under the trade name INFUSE. Suitable materials include the INFUSE block copolymers D9817.10, D9817.15, D9807.10, and D9807.15, with INFUSE D9807.15 being particularly suitable.

The blend compositions also comprise an elastomeric polymer. The elastomeric polymers tend to have a good compatibility with the olefinic block copolymer materials and are able to moderate the relatively high storage plateau modulus nature of the olefinic block copolymer materials. The elastomeric polymers, in conjunction with the tackifying resin and any other optional additives, are able to provide pressure sensitive adhesives (as opposed to, for example, hot melt adhesives that require heat to become tacky and are non-tacky at room temperature) with the desirable properties of high low surface energy adhesion, smooth as opposed to shocky peel, and good cohesive strength as evidenced by shear holding power.

A wide range of elastomeric polymers are suitable. Generally, the elastomeric polymer has a storage modulus at 25°C measured at a rate of 1 Hertz, of less than 2 x 10⁶ Pascals. The modulus can be measured using Dynamic Mechanical Analysis (DMA) techniques common in the art. Examples of suitable elastomeric polymers include styrene-based block copolymers, (meth)acrylate based copolymers, polyolefin elastomers, and the like.

In some embodiments the elastomeric polymer comprises a stryrene-based block copolymer. Examples of suitable styrene-based block copolymers include styrene-isoprene-styrene block copolymers, styrene-butadiene-styrene block copolymers, styrene-isobutylene-styrene block copolymers, styrene-ethylene-propylene-styrene block copolymers, and mixtures thereof. Examples of suitable styrene-based materials include materials commercially available under the tradename "KRATON" such as KRATON D1161, KRATON D1118, KRATON G1657, and the like, available from Kraton Corp., Houston, TX.

In some embodiments the elastomeric polymer comprises a (meth)acrylate-based polymer. Generally suitable (meth)acrylate-based polymers are random copolymers and contain (meth)acrylate monomers and may contain additional copolymerizable monomers. Examples of suitable (meth)acrylate-based polymers include those that comprise at least one C₁-C₂₀ alkyl (meth)acrylate monomer. Such polymers are made by polymerization of (meth)acrylate co-monomers as described, for example, in U.S. Patent No. Re 24906 (Ulrich). Often the polymers comprise "reinforcing co-monomers". Reinforcing co-monomers are monomers which as homopolymers that generally have a Tg of 20°C or greater. Often reinforcing monomers are acidic or basic co-monomers. Generally, as the proportion of reinforcing monomers used in preparing the (meth)acrylate random acidic copolymer increases, the cohesive strength of the resulting adhesive formed from the polymer increases.

Typically, the elastomeric (meth)acrylate copolymer can be tailored to have a resultant glass transition temperature (Tg) of less than about 0°C. Such copolymers typically are derived from monomers comprising about 40% by weight to about 98% by weight, often at least 70% by weight, or at least 85% by weight, or even about 90% by weight, of at least one alkyl (meth)acrylate monomer that, as a homopolymer, has a Tg of less than about 0°C.

Examples of such alkyl (meth)acrylate monomers are those in which the alkyl groups comprise from about 4 carbon atoms to about 12 carbon atoms and include, but are not limited to, n-butyl acrylate, 2-ethylhexyl acrylate, isooctyl acrylate, isononyl acrylate, isodecyl, acrylate, and mixtures thereof.

Examples of reinforcing co-monomers include (meth)acrylic acid, (meth)acrylamide, substituted acrylamides such as N,N-dimethyl acrylamide, itaconic acid, (meth)acrylonitrile, vinyl acetate, N-vinyl pyrrolidone, isobornyl acrylate, cyano ethyl acrylate, N-vinylcaprolactam, maleic anhydride, hydroxyalkylacrylates, N,N-dimethyl aminoethyl (meth)acrylate, N,N-diethylacrylamide, beta-carboxyethyl acrylate, vinyl esters of neodecanoic, neononanoic, neopentanoic, 2-ethylhexanoic, or propionic acids, vinylidene chloride, styrene, substituted styrenes, vinyl toluene, and alkyl vinyl ethers. Acrylic acid is particularly suitable. The copolymerizable reinforcing monomers can be used in any suitable proportion as long as the Tg of the resultant (meth)acrylate copolymer is less than about 0°C. Typically the reinforcing monomers comprise about 2% by weight to about 50% by weight, or about 5% by weight to about 30% by weight, of the (meth)acrylate copolymer.

In certain embodiments, the elastomeric (meth)acrylate random copolymer is derived from between about 1 and about 20 weight percent of acrylic acid and between about 99 and about 80 weight percent of at least one of iso-octyl acrylate, 2-ethyl-hexyl acrylate or n-butyl acrylate. In some embodiments, the elastomeric (meth)acrylate random copolymer is derived from between about 2 and about 10 weight percent acrylic acid and between about 90 and about 98 weight percent of at least one of iso-octyl acrylate, 2-ethyl-hexyl acrylate or n-butyl acrylate.

A particularly suitable class of elastomeric (meth)acrylate random copolymers are elastomeric (meth)acrylate random copolymers contained within a thermoplastic pouch. Typically, these copolymers are themselves adhesives. These adhesives and methods for preparing them are described, for example, in US Patent Nos. 5,804,610 (Hamer et al.) and 6,294,249 (Hamer et al.). Polymerization of (meth)acrylate polymers in a pouch provides for very convenient handling and dispensing of these inherently tacky polymers.

The above patent disclosures provide methods for making packaged viscoelastic compositions such as pressure sensitive adhesives, in which the packaging material is retained following polymerization (and thus becomes part of the final product). The methods comprise:
(a) providing a pre-adhesive composition which upon exposure to transmissive energy polymerizes to provide a hot melt processable (meth)acrylate random copolymer adhesive;
(b) substantially surrounding the pre-adhesive composition with a packaging material;
(c) exposing the pre-adhesive composition to transmissive energy capable of polymerizing the pre-adhesive composition; and
(d) allowing polymerization of the pre-adhesive composition to occur to provide the hot melt processable (meth)acrylate random copolymer adhesive.

The packaging material is selected such that it does not substantially adversely affect the desired adhesive properties of the hot melt processable (meth)acrylate random copolymer adhesive composition when the hot melt processable (meth)acrylate random copolymer adhesive composition and the packaging material are melted and mixed together. The desired adhesive properties, such as peel strength and shear strength, can be controlled by the choice of pre-adhesive composition, the packaging material, as well as other factors. The pre-adhesive composition polymerizes upon exposure to transmissive energy.

Generally, the pre-polymeric mixture is a monomeric mixture that comprises 50 to 100 parts by weight of one or more monomeric acrylic or methacrylic esters of non-tertiary alkyl alcohols, with the alkyl groups having from 1 to 20 carbon atoms (e.g., from 3 to 18 carbon atoms). Suitable acrylate monomers include methyl acrylate, ethyl acrylate, n-butyl acrylate, lauryl acrylate, 2-ethylhexyl acrylate, cyclohexyl acrylate, iso-octyl acrylate, octadecyl acrylate, nonyl acrylate, decyl acrylate, isobornyl acrylate, and dodecyl acrylate. Also useful are aromatic acrylates, acrylates containing aryl groups, e.g., benzyl acrylate and cyclobenzyl acrylate. The pre-polymerization mixture may also comprise about 0 to 50 parts co-monomer. One class of useful co-monomers includes those sometimes referred to as reinforcing co-monomers, having a homopolymer glass transition temperature greater than the glass transition temperature of the acrylate homopolymer. Examples of suitable co-monomers falling within this class include acrylic acid, acrylamide, methacrylamide, substituted acrylamides such as N,N-dimethyl acrylamide, itaconic acid, methacrylic acid, acrylonitrile, methacrylonitrile, vinyl acetate, N-vinyl pyrrolidone, isobornyl acrylate, cyano ethyl acrylate, N-vinylcaprolactam, maleic anhydride, hydroxyalkylacrylates, N,N-dimethyl aminoethyl (meth)acrylate, N,N-diethylacrylamide, beta-carboxyethyl acrylate, vinyl esters of neodecanoic, neononanoic, neopentanoic, 2-ethylhexanoic, or propionic acids (e.g., available from Union Carbide Corp. of Danbury, Conn. under the designation "Vynates"), vinylidene chloride, styrene, vinyl toluene, and alkyl vinyl ethers.

Generally, the pre-adhesive composition includes an appropriate initiator typically a photoinitiator. Useful photoinitiators include substituted acetophenones such as benzyl dimethyl ketal and 1-hydroxycyclohexyl phenyl ketone, substituted alpha-ketols such as 2-methyl-2-hydroxypropiophenone, benzoin ethers such as benzoin methyl ether, benzoin isopropyl ether, substituted benzoin ethers such as anisoin methyl ether, aromatic sulfonyl chlorides, and photoactive oximes. The photoinitiator may be used in an amount from about 0.001 to about 5.0 parts by weight per 100 parts of total monomer, typically from about 0.01 to about 5.0 parts by weight per 100 parts of total monomer, and more typically in an amount from 0.1 to 0.5 parts by weight per 100 parts of total monomer.

Typically, the weight average molecular weight of the polymerized pre-polymeric mixture can range from about 50,000 to about 3,000,000, or from about 100,000 to about 1,800,000, and more typically from about 200,000 to about 1,500,000.

In some embodiments the elastomeric polymer comprises a polyolefin elastomer. Examples of suitable polyolefin elastomers include polyisobutylene (PIB), ethylene-propylene rubber (EPR), ethylene-propylene-diene monomer rubber (EPDM), a copolymer of ethylene and at least one C₃-C₂₀ alpha-olefin, or combinations thereof. In some embodiments, the polyolefin elastomer comprises a copolymer of ethylene and at least one C₃-C₂₀ alpha-olefin having a density of less than 0.87 g/cm³ (grams per cubic centimeter). Examples of suitable polyolefin elastomers include the commercially available materials: OPPANOL B15 (PIB) and OPPANOL B30 (PIB) commercially available from BASF Florham Park, NJ; KELTAN 1200A (EPR) available from LANXESS, Akron, OH; VISTAMAXX 6206 (EPR) available from ExxonMobil Corp. Houston, TX; and ENGAGE 8130 (Ethylene-Octene-Copolymer) available from DOW Chemical Corp., Freeport, TX. Especially suitable ones are OPPANOL B15, OPPANOL B30, KELTAN 1200A, and ENGAGE 8130.

The composition blend also includes at least one tackifying resin that is at least partially compatible with the other components of the composition blends. Often combinations of two or more tackifying resins are used. Typically the tackifying resin or combination of resins has a softening point of less than 120°C. In some embodiments, the tackifying resin or combination of resins have a softening point of less than 110°C, less than 100°C, or even 95°C. Tackifying resins with softening points of less than 95°C may be particularly suitable in some embodiments. Suitable tackifying resins include, for example, terpene phenolics, rosins, rosin esters, esters of hydrogenated rosins, synthetic hydrocarbon resins and combinations thereof. A wide variety of commercially available tackifying resins are available and are suitable for use in the composition blends. Examples of suitable tackifying resins include the commercially available tackifying resins: FORAL 85, PICCOLYTE AO and HERCOLYN D resins commercially available from Hercules Inc., Wilmington, DE; ESCOREZ 2520 and ESCOREZ 5300 commercially available from ExxonMobil Corp., Houston, TX; STAYBELITE Ester 3-E, REGALREZ 1094, and REGALITE R1090 commercially available from Eastman Chemical, Kingsport, TN; WINGTACK ET commercially available from CRAY VALLEY, Exton, PA; and SUKOREZ 100 and SUKOREZ 110 commercially available from Kolon Industries Corp., City Kyunggi-Do, Korea. Especially suitable tackifying resins include the commercially available tackifying resins: FORAL 85, ESCOREZ 5300, REGALITE R1090, WINGTACK ET, and SUKOREZ 100.

The composition blend may additionally contain other additives in addition to the elastomeric polymer and the tackifying resins described above, as long as the additives do not adversely affect the hot melt processability or the adhesive properties of the pressure sensitive adhesive. These additives may include, for example, plasticizers, crosslinkers, UV stabilizers, antistatic agents, colorants, antioxidants, fungicides, bactericides, organic and/or inorganic filler particles, and the like.

Optionally, low levels of plasticizer (e.g., less than about 10 parts by weight) may be added to the composition blend. A wide variety of commercially available materials described as "plasticizers" are suitable, as long as the added plasticizer is compatible with the other components of the composition blend. Representative plasticizers include polyoxyethylene aryl ether, dialkyl adipate, 2-ethylhexyl diphenyl phosphate, t-butylphenyl diphenyl phosphate, di(2-ethylhexyl) adipate, toluenesulfonamide, dipropylene glycol dibenzoate, polyethylene glycol dibenzoate, polyoxypropylene aryl ether, dibutoxyethoxyethyl formal, and dibutoxyethoxyethyl adipate. Especially suitable is the plasticizer SANTICIZER 141 (2-ethylhexyl diphenyl phosphate) commercially available from Ferro Corp., Cleveland, OH.

The pressure sensitive adhesives of this disclosure may be prepared by a variety of hot melt techniques. Generally, the methods comprise providing a hot melt mixing apparatus, providing an olefin block copolymer, an elastomeric polymer, a tackifying resin and any optical additives to a hot melt mixing apparatus to prepare a hot melt processable mixture, mixing the hot melt processable mixture to form the composition blend, removing the blend from the hot melt mixing apparatus, and forming a hot melt processable pressure sensitive adhesive.

A variety of hot melt mixing techniques using a variety of hot melt mixing equipment are suitable for preparing the pressure sensitive adhesives of this disclosure. Both batch and continuous mixing equipment may be used. Examples of batch methods include those using a BRABENDER (e. g. a BRABENDER PREP CENTER, commercially available from C.W. Brabender Instruments, Inc.; South Hackensack, NJ) or BANBURY internal mixing and roll milling equipment (e.g. equipment available from Farrel Co.; Ansonia, CN). Examples of continuous methods include single screw extruding, twin screw extruding, disk extruding, reciprocating single screw extruding, and pin barrel single screw extruding. Continuous methods can utilize distributive elements, pin mixing elements, static mixing elements, and dispersive elements such as MADDOCK mixing elements and SAXTON mixing elements. A single hot melt mixing apparatus may be used, or a combination of hot melt mixing equipment may be used to prepare the hot melt blends and the pressure sensitive adhesives of this disclosure. In some embodiments, it may be desirable to use more than one piece of hot melt mixing equipment. For example, one extruder, such as, for example, a single screw extruder, can be used to hot melt process the hot melt processable elastomeric (meth)acrylate random copolymer contained within a thermoplastic pouch. The output of this extruder can be fed into a second extruder, for example, a twin screw extruder for hot melt mixing with the additional components.

The output of the hot melt mixing is coated onto a substrate to form an adhesive layer. If a batch apparatus is used, the hot melt blend can be removed from the apparatus and placed in a hot melt coater or extruder and coated onto a substrate. If an extruder is used to prepare the hot melt blend, the blend can be directly extruded onto a substrate to form an adhesive layer in a continuous forming method. In the continuous forming method, the adhesive can be drawn out of a film die and subsequently contacted to a moving plastic web or other suitable substrate. If the adhesive is to be part of a tape, the substrate may be a tape backing. In some methods, the tape backing material is coextruded with the adhesive from a film die and the multilayer construction is then cooled to form the tape in a single coating step. If the adhesive is to be a transfer tape, the adhesive layer may be a free standing film and the substrate may be a release liner or other releasing substrate. After forming, the adhesive layer or film can be solidified by quenching using both direct methods (e.g. chill rolls or water batch) and indirect methods (e.g. air or gas impingement).

The above described methods can be used to form a wide array of adhesive articles. These articles comprise a substrate with a first surface and a second surface, and a hot melt processable pressure sensitive adhesive disposed on at least a portion of the first surface of the substrate. The hot melt processable pressure sensitive adhesive comprises the composition blends described above.

A wide variety of substrates are suitable for use in the articles of this disclosure. Examples of suitable substrates include films, release liners, tape backings, metal foils, plates, the outer surfaces of articles, and the like. The substrates may be rigid or flexible. Examples of rigid substrates include glass sheets, rigid polymeric sheets and device surfaces (for example metal). Examples of flexible substrates include films, sheets, foils, tape backings, release liners and the like. The substrate can contain polymeric materials, glass materials, ceramic materials, metal-containing materials (e.g., metals or metal oxides), or a combination thereof. The substrate can include multiple layers of material such as a support layer, a primer layer, a hard coat layer, a decorative design, and the like.

Examples of film substrates include polymeric films such as those that contain polycarbonates, polyesters (e.g., polyethylene terephthalates and polyethylene naphthalates), polyurethanes, poly(meth)acrylates (e.g., polymethyl methacrylates), polyvinyl alcohols, polyolefins such as polyethylenes and polypropylenes, polyvinyl chlorides, polyimides, cellulose triacetates, acrylonitrile-butadiene-styrene copolymers, and the like.

Examples of release liners include paper, e.g., kraft paper, or polymeric films, e.g., polyethylene, polypropylene or polyester. At least one surface of the liner can be treated with a release agent such as silicone, a fluorochemical, or other low surface energy based release material to provide a release liner. Suitable release liners and methods for treating liners are described in, e.g., U.S. Patent Nos. 4,472,480, 4,980,443 and 4,736,048. The liner can have a microstructure on its surface that is imparted to the adhesive to form a microstructure on the surface of the adhesive film. The liner can then be removed to expose an adhesive film having a microstructured surface.

Examples of tape backings include polymeric films such as those described above, metal films, paper, creped paper, foams and the like. In some embodiments, the tape backing includes a releasing surface, often referred to as a low adhesion backsize or LAB, on the surface opposite to the surface that is coated with a pressure sensitive adhesive. This LAB surface permits the article to be rolled up and unrolled.

Examples of metal foils include thin films of metal or metal alloys such as aluminum foil, tin foil and the like.

Examples of plates include glass plates and polymeric plates. Often these polymeric plates are transparent like glass. Examples of polymeric plates include polymethylmethacrylate (PMMA) plates and polycarbonate (PC) plates.

The hot melt processable pressure sensitive adhesive layer can have a wide range of thicknesses depending upon the desired use of the article, the nature of the substrate, etc. Typically the hot melt processable pressure sensitive adhesive has a thickness of about 13 micrometers to about 1.27 millimeters (0.5 mil to 50 mils).

Particularly suitable articles are tape articles, wherein the substrate comprises a tape backing. As mentioned above, a wide range of tape backings are suitable. Especially suitable tape backings are polymeric films.

As mentioned previously, one of the desirable features of the pressure sensitive adhesives prepared from the composition blends of this disclosure is their ability to adhere well to low surface energy substrates. This adhesion can be demonstrated by adhesion to, for example, olefinic substrates such as polypropylene. The adhesion can be tested, for example, by testing the peel strength of a bond formed between a tape and a low surface energy surface. For example, a tape article can be prepared as described above and tested for 180° Peel Adhesion using a modified version of the ASTM Test Method D 3330-90 with a polypropylene substrate instead of a stainless steel one. In some embodiments, the tapes of this disclosure have a peel adhesion to polypropylene of at least 10 Newtons/decimeter.

The present disclosure includes the following embodiments.

Among the embodiments are composition blends. A first embodiment includes a composition blend comprising: at least one olefinic block copolymer; at least one elastomeric polymer; and at least one tackifying resin, wherein the blend comprises a hot melt processable pressure sensitive adhesive.

Embodiment 2 is the composition of embodiment 1, wherein the composition blend comprises: 10-70% by weight olefinic block copolymer; 1-70% by weight elastomeric polymer; and 10-70% by weight tackifying resin.

Embodiment 3 is the composition of embodiment 1 or 2, wherein the olefinic block copolymer comprises at least one block comprising crystalline ethylene and at least one block comprising at least one C₃-C₂₀ alpha-olefin.

Embodiment 4 is the composition of embodiment 3, wherein the at least one block comprising crystalline ethylene comprises less than 30% by weight of the olefinic block copolymer.

Embodiment 5 is the composition of embodiment 3, wherein the at least one block comprising crystalline ethylene comprises less than 15% by weight of the olefinic block copolymer.

Embodiment 6 is the composition of any of embodiments 1-5, wherein the olefinic block copolymer has a density of less than 0.90 g/cm³ (grams per cubic centimeter), and a melt temperature of from about 100°C to about 120°C.

Embodiment 7 is the composition of any of embodiments 1-5, wherein the olefinic block copolymer has a density of less than 0.90 g/cm³ (grams per cubic centimeter), and a melt temperature of from about 110°C to about 120°C.

Embodiment 8 is the composition of any of embodiments 1-7, wherein the elastomeric polymer has a storage modulus at 25°C measured at a rate of 1 Hertz, of less than 2 x 10⁶ Pascals.

Embodiment 9 is the composition of any of embodiments 1-8, wherein the elastomeric polymer comprises a styrene-based block copolymer, a (meth)acrylate based copolymer, or a polyolefin elastomer.

Embodiment 10 is the composition of embodiment 9, wherein the styrene-based block copolymer comprises a styrene-isoprene-styrene block copolymer, a styrene-butadiene-styrene block copolymer, a styrene-isobutylene-styrene block copolymer, a styrene-ethylene-propylene-styrene block copolymer, or mixtures thereof.

Embodiment 11 is the composition of embodiment 9, wherein the (meth)acrylate-based polymer comprises at least one C₁-C₂₀ alkyl (meth)acrylate monomer.

Embodiment 12 is the composition of embodiment 11, wherein the (meth)acrylate-based polymer further comprises at least one reinforcing monomer, selected from (meth)acrylic acid, (meth)acrylamide, styrene, or a substituted styrene.

Embodiment 13 is the composition of embodiment 11 or 12, wherein the (meth)acrylate-based polymer is prepared within a pouch.

Embodiment 14 is the composition of embodiment 9, wherein the polyolefin elastomer comprises polyisobutylene (PIB), ethylene-propylene rubber (EPR), ethylene-propylene-diene monomer rubber (EPDM), a copolymer of ethylene and at least one C₃-C₂₀ alpha-olefin, or combinations thereof.

Embodiment 15 is the composition of embodiment 14, wherein the polyolefin elastomer comprises a copolymer of ethylene and at least one C₃-C₂₀ alpha-olefin having a density of less than 0.87 g/cm³ (grams per cubic centimeter).

Embodiment 16 is the composition of any of embodiments 1-15, wherein the tackifying resin has a softening point of less than 120°C.

Embodiment 17 is the composition of any of embodiments 1-16, wherein he tackifying resin has a softening point of less than 95°C.

Embodiment 18 is the composition of any of embodiments 1-17, further comprising at least one plasticizing agent.

Among the embodiments are articles. Embodiment 19 is an article comprising: a substrate with a first surface and a second surface; and a hot melt processable pressure sensitive adhesive disposed on at least a portion of the first surface of the substrate, the blend composition comprising: at least one olefinic block copolymer; at least one elastomeric polymer; and at least one tackifying resin.

Embodiment 20 is the article of embodiment 19, wherein the substrate comprises a film, a release liner, a tape backing, a metal foil, a plate, or the outer surface of an article.

Embodiment 21 is the article of embodiment 19 or 20, wherein the hot melt processable pressure sensitive adhesive comprises: 10-70% by weight olefinic block copolymer; 1-70% by weight elastomeric polymer; and 10-70% by weight tackifying resin.

Embodiment 22 is the article of any of embodiments 19-21, wherein the olefinic block copolymer comprises at least one block comprising crystalline ethylene and at least one block comprising at least one C₃-C₂₀ alpha-olefin.

Embodiment 23 is the article of embodiment 22, wherein the at least one block comprising crystalline ethylene comprises less than 30% by weight of the olefinic block copolymer.

Embodiment 24 is the article of embodiment 22, wherein the at least one block comprising crystalline ethylene comprises less than 15% by weight of the olefinic block copolymer.

Embodiment 25 is the article of any of embodiments 19-24, wherein the olefinic block copolymer has a density of less than 0.90 g/cm³ (grams per cubic centimeter), and a melt temperature of from about 100°C to about 120°C.

Embodiment 26 is the article of any of embodiments 19-24, wherein the olefinic block copolymer has a density of less than 0.90 g/cm³ (grams per cubic centimeter), and a melt temperature of from about 110°C to about 120°C.

Embodiment 27 is the article of any of embodiments 19-26, wherein the elastomeric polymer has a storage modulus at 25°C measured at a rate of 1 Hertz, of less than 2 x 10⁶ Pascals.

Embodiment 28 is the article of any of embodiments 19-27, wherein the elastomeric polymer comprises a styrene-based block copolymer, a (meth)acrylate based copolymer, or a polyolefin elastomer.

Embodiment 29 is the article of embodiment 28, wherein the styrene-based block copolymer comprises a styrene-isoprene-styrene block copolymer, a styrene-butadiene-styrene block copolymer, a styrene-isobutylene-styrene block copolymer, a styrene-ethylene-propylene-styrene block copolymer, or mixtures thereof.

Embodiment 30 is the article of embodiment 28, wherein the (meth)acrylate-based polymer comprises at least one C₁-C₂₀ alkyl (meth)acrylate monomer.

Embodiment 31 is the article of embodiment 30, wherein the (meth)acrylate-based polymer further comprises at least one reinforcing monomer, selected from (meth)acrylic acid, (meth)acrylamide, styrene, or a substituted styrene.

Embodiment 32 is the article of embodiment 30 or 31, wherein the (meth)acrylate-based polymer is prepared within a pouch.

Embodiment 33 is the article of embodiment 28, wherein the polyolefin elastomer comprises polyisobutylene (PIB), ethylene-propylene rubber (EPR), ethylene-propylene-diene monomer rubber (EPDM), a copolymer of ethylene and at least one C₃-C₂₀ alpha-olefin, or combinations thereof.

Embodiment 34 is the article of embodiment 33, wherein the polyolefin elastomer comprises a copolymer of ethylene and at least one C₃-C₂₀ alpha-olefin having a density of less than 0.87 g/cm³ (grams per cubic centimeter).

Embodiment 35 is the article of any of embodiments 19-34, wherein the tackifying resin has a softening point of less than 120°C.

Embodiment 36 is the article of any of embodiments 19-34, wherein he tackifying resin has a softening point of less than 95°C.

Embodiment 37 is the article of any of embodiments 19-36, further comprising at least one plasticizing agent.

Embodiment 38 is the article of any of embodiments 19-37, wherein the hot melt processable pressure sensitive adhesive has a thickness of about 13 micrometers to about 1.27 millimeters (0.5 mil to 50 mils).

Embodiment 39 is the article of any of embodiments 19-38, wherein the substrate comprises a tape backing, and the article comprises a tape.

Embodiment 40 is the article of embodiment 39, wherein the tape has a room temperature peel adhesion as measured using a modified version of ASTM Test Method D 3330-90 with a polypropylene substrate, of at least 10 Newtons/decimeter.

### Examples

These examples are merely for illustrative purposes only and are not meant to be limiting on the scope of the appended claims. All parts, percentages, ratios, etc. in the examples and the rest of the specification are by weight, unless noted otherwise. Solvents and other reagents used were obtained from Sigma-Aldrich Chemical Company; Milwaukee, Wisconsin unless otherwise noted. The following abbreviations are used: cm = centimeters; in = inch; RPM = revolutions per minute; kg = kilograms; lb = pounds; Pa = Pascals; min = minutes; hrs = hours; CTH = Controlled Temperature and Humidity. The terms "weight %", "% by weight", and "wt%" are used interchangeably.

**Table of Abbreviations**

| Abbreviation or Trade Designation | Description |
|---|---|
| OBC | Olefin Block Copolymer, commercially available from DOW Chemical Corporation, Freeport, TX, as "INFUSE D9807" |
| SIS | Styrene-Isoprene-Styrene Copolymer having a storage modulus at 25°C of 3.5x10⁵Pa, commercially available from Kraton Polymers, Houston, TX, as "KRATON D1161". |
| Tackifier-1 | A cycloaliphatic hydrocarbon based tackifier, commercially available from Eastman Chemical Company, Kingsport, TN, as "REGALITE R1090". |
| Tackifier-2 | A cycloaliphatic hydrocarbon based tackifier, commercially available from Eastman Chemical Company, Kingsport, TN, as "REGALREZ 1094". |
| Tackifier-3 | An ester of a hydrogenated rosin, commercially available from Eastman Chemical Company, Kingsport, TN, as "FORAL 85". |
| Tackifier-4 | An aliphatic hydrocarbon based tackifier, commercially available from Cray Valley USA, LLC; Exton PA, as "WINGTACK ET". |
| Tackifier-5 | Commercially available from ExxonMobil; Houston TX, as "ESCOREZ 5300". |
| Elastomer-1 | A polyisobutylene copolymer elastomer with a storage modulus at 25°C/1Hz of 0.8x10⁵Pa, commercially available from BASF, Florham Park, NJ, as "OPPANOL B15". |
| Elastomer-2 | A polyisobutylene copolymer elastomer with a storage modulus at 25°C/1Hz of 1.3x10⁵Pa, commercially available from BASF, Florham Park, NJ, as "OPPANOL B30". |
| Elastomer-3 | An amorphous ethylene-propylene copolymer elastomer with a storage modulus at 25°C/1Hz of 7x10⁵Pa, commercially available from LANXESS, Akron OH, as "KELTAN 1200". |
| Elastomer-4 | An elastomer in a pouch of 2 ethylhexyl acrylate-acylic acid copolymer (2EHA/AA) prepared by solventless polymerization method using polymerizing packaged pre-adhesive compositions described in U.S. Patent No. 5,804,610 (Hamer et al.). The composition contained 2EHA/AA = 95/5 with 0.02% isooctylthioglycolate(IOTG), 15% 2,2-dimethoxy-1,2-diphenylethan-1-one (IRGACURE 651). |
| MTA | Magnesium Tetraacetate |
| AO | Antioxidant, commercially available from BASF, Florham Park, NJ, as "IRGANOX 1076". |
| PET Film | Primed polyester film commercially available from Mitsubishi Polyester Film, Inc.; Greer SC, as "HOSTAPHAN 3SAB". |

### Test Methods

### 90° Angle Peel Adhesion Strength Test.

Peel adhesion strength was measured at a 90° angle using an IMASS SP-200 slip/peel tester (available from IMASS, Inc., Accord MA) at a peel rate of 305 mm/minute (12 inches/minute) using the procedure described in ASTM International standard, D3330, Method. The test substrate panels shown in Table A were prepared by wiping the panels with a dry tissue or a tissue wetted with the solvents shown using heavy hand pressure to wipe the panel 8 - 10 times. This procedure was repeated two more times. The cleaned panel was allowed to dry. The adhesive tape samples to be tested were cut into strips measuring 1.27 cm x 20 cm (1/2 in. x 8 in.) and the strips were rolled down onto the cleaned panel with a 2.0 kg (4.5 lb.) rubber roller using 2 passes. The laminated tapes with substrates were stored at 23°C/50% relative humidity (Controlled Temperature and Humidity CTH) for 30 minutes dwell time before testing. In some examples, laminated tapes were aged for 24 hrs at 70°C, then tested at 23°C/50% relative humidity (CTH) as noted. Two samples were tested for each example and averaged values are expressed in Newtons per decimeter (N/dm).

**Table A: Peel Adhesion Test Panel Substrates**

| **Substrate Material** | **Cleaning Protocol** |
|---|---|
| HDPE: High density polyethylene | Wet tissue with Isopropyl alcohol |
| PP: Polypropylene | Wet tissue with Isopropyl alcohol |
| TPO: Thermoplastic Olefin | Dry tissue - No solvent |
| SS: Stainless Steel | Wet tissue with Heptane |

### Static Shear Strength

The static shear strength was determined as described in the ASTM International standard, D3654, Procedure A at 23°C/50% relative humidity (RT) using a 1000 g load. Tape test samples measuring 1.27 cm x 15.24 cm (1/2 in. x 6 in.) were adhered to 1.5 inch by 2 inch stainless steel (SS) panels using the method to clean the panels and adhere the tape described in the peel adhesion test. The tape overlapped the panel by 1.27 cm x 2.5 cm. and the strip was folded over itself on the adhesive side, and then folded again. A hook was hung in the second fold and secured by stapling the tape above the hook. The weight was attached to the hook and the panels were hung in a 23°C/50% CTH room. The time to failure in minutes was recorded. If no failure was observed after 20,000 minutes, the test was stopped and a value of 20,000 minutes was recorded.

### Examples 1-3, and Comparative Examples C1-C2

Sample pressure sensitive adhesive compositions were prepared by blending OBC, and SIS in the amount shown in Table 1 with 50 % by weight of Tackifier-2 and 1 % by weight AO in a twin screw extruder with the barrel temperature set at 300°C, a screw speed of 300 RPM, and a die temperature setting at 280°C. A tape was prepared by coating the composition onto PET Film at a nominal thickness of 51 micrometers (2 mils) and a width of about 15.2 centimeters (6 inches) through a drop die. The tapes were tested for 90° Peel Adhesion and Static Shear Strength using the test methods described above. The 90° Peel Adhesion test were run with substrates and conditions shown in Table 1.

**Table 1**

| Ex. | OBC (wt%) | SIS (wt%) | 90°Peel (N/dm) HDPE^{a} | 90°Peel (N/dm) SS^{a} | 90°Peel (N/dm) PP^{a} | 90°Peel (N/dm) ppb | 90°Peel (N/dm) TPO^{a} | 90°Peel (N/dm) TPO^{b} | Static Shear (min) |
|---|---|---|---|---|---|---|---|---|---|
| 1 | 38 | 13 | 25.2 | 72.5 | 14.1 | 149.5 | 12.2 | 100.9 | 20,000 |
| 2 | 25 | 25 | 46.0 | 114.8 | 37.8 | 124.9 | 37.5 | 85.3 | 20,000 |
| 3 | 13 | 38 | 58.6 | 120.2 | 38.2 | 130.9 | 125.5 | 87.1 | 20,000 |
| C1 | 50 | 0 | 3.7 | 20.6 | 10.3 | 20.8 | 0.3 | 13.1 | 20,000 |
| C2 | 0 | 50 | 62.6 | 131.0 | 100.4 | 113.4 | 28.8 | 103.6 | 20,000 |

| | | | | | | | | | |
|---|---|---|---|---|---|---|---|---|---|
| a: 90° peel adhesion after dwell time on substrates for 30 minutes at CTH. b: 90° peel adhesion after laminated tapes were aged on the substrate for 24 hours at 70°C, then tested at CTH. | | | | | | | | | |

### Examples 4-6 and Comparative Example C3

Adhesive compositions and tapes were prepared and tested as described for Examples 1-3 above, except that various tackifiers were used as shown (as the column "Tack ID") in Table 2 below. The amount of tackifier in each example was 50 weight % and the amount of AO was 1 weight % as in Examples 1-3 above.

**Table 2**

| Ex. | OBC (wt%) | SIS (wt%) | Tack ID | 90°Peel (N/dm) HDPE^{a} | 90°Peel (N/dm) SS^{a} | 90°Peel (N/dm) PP^{a} | 90°Peel (N/dm) PP^{b} | 90°Peel (N/dm) TPO^{a} | 90°Peel (N/dm) TPO^{b} | Static Shear (min) |
|---|---|---|---|---|---|---|---|---|---|---|
| C3 | 50 | 0 | 4 | 9.6 | 38.3 | 9.2 | 116.7 | 30.2 | 92.4 | 20,000 |
| 4 | 25 | 25 | 4 | 58.0 | 134.0 | 130.2 | 111.1 | 16.7 | 128.1 | 20,000 |
| 5 | 25 | 25 | 5 | 37.6 | 94.2 | 110.3 | 87.5 | 15.9 | 58.7 | 20,000 |
| 6 | 25 | 25 | 3 | 51.0 | 120.8 | 94.9 | 89.9 | 126.3 | 107.1 | 20,000 |

| | | | | | | | | | | |
|---|---|---|---|---|---|---|---|---|---|---|
| a: 90° peel adhesion after dwell time on substrates for 30 minutes at CTH. b: 90° peel adhesion after laminated tapes were aged on the substrate for 24 hours at 70°C, then tested at CTH. | | | | | | | | | | |

### Examples 7-9 and Comparative Examples C4-C5

Adhesive compositions and tapes were prepared and tested as described for Examples 1-3 above, except that Elastomer-4 (called ELAS in Table 3 below) was used in place of SIS. Elastomer-4 was contained within pouches of 47 grams and dimensions of 13x5 centimeters. The compositions also included 50 weight % of Tackifier-3, AO of 1 weight %, and additionally included MTA of 3 parts by weight by per 100 parts by weight of Elastomer-4.

**Table 3**

| Ex. | OBC (wt%) | ELAS (wt%) | 90°Peel (N/dm) HDPE^{a} | 90°Peel (N/dm) SS^{a} | 90°Peel (N/dm) PP^{a} | 90°Peel (N/dm) PP^{b} | 90°Peel (N/dm) TPO^{a} | 90°Peel (N/dm) TPO^{b} | Static Shear (min) |
|---|---|---|---|---|---|---|---|---|---|
| 7 | 38 | 13 | 2.5 | 53.8 | 37.4 | 17.5 | 9.5 | 26.3 | >10000 |
| 8 | 25 | 25 | 16.5 | 110.4 | 88.4 | 245.2 | 60.3 | 319.6 | 2501 |
| 9 | 13 | 38 | 33.9 | 139.7 | 135.9 | 245.2 | 142.2 | 245.2 | 442 |
| C4 | 50 | 0 | 0.1 | 25.2 | 10.7 | 4.4 | 1.1 | 4.4 | >10000 |
| C5 | 0 | 50 | 14.8 | 153.3 | 152.5 | 148.9 | 153.9 | 236.4 | 294 |

| | | | | | | | | | |
|---|---|---|---|---|---|---|---|---|---|
| a: 90° peel adhesion after dwell time on substrates for 30 minutes at CTH. b: 90° peel adhesion after laminated tapes were aged on the substrate for 24 hours at 70°C, then tested at CTH. | | | | | | | | | |

### Examples 10-12 and Comparative Example C6

For Examples 10-12, sample pressure sensitive adhesive compositions were prepared by blending OBC (22 weight %), and the Elastomer shown in Table 4 (22 weight %) with 56 weight % of Tackifier-1 and 1 % by weight AO. For Comparative Example C6, the sample pressure sensitive adhesive composition contained OBC (44 weight %), with 56 weight % of Tackifier-1 and 1 % by weight AO, but no Elastomer. The formed compositions were fed through a twin screw extruder as described in Examples 1-3 above. A tape was prepared by coating the composition onto PET Film at a nominal thickness of 38 micrometers (1.5 mils) and a width of about 15.2 centimeters (6 inches) through a drop die. The tapes were tested for 90° Peel Adhesion and Static Shear Strength using the test methods described above. The 90° Peel Adhesion test were run with substrates and conditions shown in Table 4.

**Table 4**

| Example | Elastomer ID | 90°Peel (N/dm) HDPE^{a} | 90°Peel (N/dm) PP^{a} | 90°Peel (N/dm) SS^{a} | Static Shear (min) |
|---|---|---|---|---|---|
| 10 | Elastomer-1 | 13.8 | 96.5 | 69.4 | 683 |
| 11 | Elastomer-2 | 17.2 | 89.6 | 180.6 | 2149 |
| 12 | Elastomer-3 | 32.9 | 214.0 | 228.0 | 4274 |
| C6 | None | 17.0 | 91.8 | 26.3 | 10000 |

| | | | | | |
|---|---|---|---|---|---|
| a: 90° peel adhesion after dwell time on substrates for 30 minutes at CTH. | | | | | |

## Claims

1. A composition blend comprising:
at least one olefinic block copolymer;
at least one elastomeric polymer; and
at least one tackifying resin, wherein the blend comprises a hot melt processable pressure sensitive adhesive.

2. The composition of claim 1, wherein the composition blend comprises:
10-70% by weight olefinic block copolymer;
1-70% by weight elastomeric polymer; and
10-70% by weight tackifying resin.

3. The composition of claim 1, wherein the olefinic block copolymer comprises at least one block comprising crystalline ethylene and at least one block comprising at least one C₃-C₂₀ alpha-olefin.

4. The composition of claim 3, wherein the at least one block comprising crystalline ethylene comprises less than 30% by weight of the olefinic block copolymer.

5. The composition of claim 1, wherein the olefinic block copolymer has a density of less than 0.90 g/cm³ (grams per cubic centimeter), and a melt temperature of from about 100°C to about 120°C.

6. The composition of claim 1, wherein the elastomeric polymer has a storage modulus at 25°C measured at a rate of 1 Hertz, of less than 2 x 10⁶ Pascals.

7. The composition of claim 1, wherein the elastomeric polymer comprises a styrene-based block copolymer, a (meth)acrylate based copolymer, or a polyolefin elastomer.

8. The composition of claim 7, wherein the (meth)acrylate-based copolymer is prepared within a pouch.

9. An article comprising:
a substrate with a first surface and a second surface; and
a hot melt processable pressure sensitive adhesive blend composition disposed on at least a portion of the first surface of the substrate, the blend composition comprising:
at least one olefinic block copolymer;
at least one elastomeric polymer; and
at least one tackifying resin.

10. The article of claim 9, wherein the substrate comprises a tape backing, the article comprises a tape, and the tape has a room temperature peel adhesion as measured using a modified version of ASTM Test Method D 3330-90 with a polypropylene substrate, of at least 10 Newtons/decimeter.

## Patentansprüche

1. Zusammensetzungsmischung, umfassend:
mindestens ein olefinisches Blockcopolymer;
mindestens ein elastomeres Polymer; und
mindestens ein Klebeharz, wobei die Mischung einen durch Heißschmelzen verarbeitbaren Haftkleber umfasst.

2. Zusammensetzung nach Anspruch 1, wobei die Zusammensetzungsmischung Folgendes umfasst:
10-70 Gew.-% olefinisches Blockcopolymer;
1-70 Gew.-% elastomeres Polymer; und
10-70 Gew.-% Klebeharz.

3. Zusammensetzung nach Anspruch 1, wobei das olefinische Blockcopolymer mindestens einen Block, der kristallines Ethylen umfasst, und mindestens einen Block, der mindestens ein C₃-C₂₀-alpha-Olefin umfasst, umfasst.

4. Zusammensetzung nach Anspruch 3, wobei der mindestens eine Block, der kristallines Ethylen umfasst, zu weniger als 30 Gew.-% das olefinische Blockcopolymer umfasst.

5. Zusammensetzung nach Anspruch 1, wobei das olefinische Blockcopolymer eine Dichte von weniger als 0,90 g/cm³ (Gramm pro Kubikzentimeter) und eine Schmelztemperatur von ungefähr 100 °C bis ungefähr 120 °C aufweist.

6. Zusammensetzung nach Anspruch 1, wobei das elastomere Polymer einen Speichermodul bei 25 °C, gemessen mit einer Rate von 1 Hertz, von weniger als 2 x 10⁶ Pascal aufweist.

7. Zusammensetzung nach Anspruch 1, wobei das elastomere Polymer ein styrolbasiertes Blockcopolymer, ein (meth-)acrylatbasiertes Copolymer oder ein Polyolefinelastomer umfasst.

8. Zusammensetzung nach Anspruch 7, wobei das (meth-)acrylatbasierte Copolymer innerhalb eines Beutels hergestellt wird.

9. Artikel, umfassend:
ein Substrat mit einer ersten Oberfläche und einer zweiten Oberfläche; und
eine durch Heißschmelzen verarbeitbare Haftkleber-Mischungszusammensetzung, die auf mindestens einen Abschnitt der ersten Oberfläche des Substrats aufgebracht wird, wobei die Mischungszusammensetzung Folgendes umfasst:
mindestens ein olefinisches Blockcopolymer;
mindestens ein elastomeres Polymer; und
mindestens ein Klebeharz.

10. Artikel nach Anspruch 9, wobei das Substrat einen Bandträger umfasst, wobei der Artikel ein Band umfasst und das Band eine Schälkraft bei Raumtemperatur, wie mithilfe einer modifizierten Version des ASTM-Prüfverfahrens D 3330-90 mit einem Polypropylensubstrat gemessen, von mindestens 10 Newton/Dezimeter aufweist.

## Revendications

1. Mélange de composition comprenant :
au moins un copolymère séquencé oléfinique ;
au moins un polymère élastomère ; et
au moins une résine poisseuse, où le mélange comprend un adhésif sensible à la pression thermofusible.

2. Composition selon la revendication 1, dans laquelle le mélange de composition comprend :
10 à 70 % en poids de copolymère séquencé oléfinique ;
1 à 70 % en poids de polymère élastomère ; et
10 à 70 % en poids de résine poisseuse.

3. Composition selon la revendication 1, dans laquelle le copolymère séquencé oléfinique comprend au moins une séquence comprenant de l'éthylène cristallin et au moins une séquence comprenant au moins une alpha-oléfine en C₃ à C₂₀.

4. Composition selon la revendication 3, dans laquelle ladite au moins une séquence comprenant de l'éthylène cristallin constitue moins de 30 % en poids du copolymère séquencé oléfinique.

5. Composition selon la revendication 1, dans laquelle le copolymère séquencé oléfinique a une masse volumique inférieure à 0,90 g/cm³ (grammes par centimètre cube), et une température de fusion allant d'environ 100 °C à environ 120 °C.

6. Composition selon la revendication 1, dans laquelle le polymère élastomère a un module de conservation à 25 °C mesuré à une vitesse de 1 Hertz, inférieur à 2 x 10⁶ Pascals.

7. Composition selon la revendication 1, dans laquelle le polymère élastomère comprend un copolymère séquencé à base de styrène, un copolymère à base de (méth)acrylate ou un élastomère polyoléfinique.

8. Composition selon la revendication 7, dans laquelle le copolymère à base de (méth)acrylate est préparé au sein d'une poche.

9. Article comprenant :
un substrat avec une première surface et une deuxième surface ; et
une composition de mélange d'adhésif sensible à la pression thermofusible disposée sur au moins une partie de la première surface du substrat, la composition de mélange comprenant :
au moins un copolymère séquencé oléfinique ;
au moins un polymère élastomère ; et au moins une résine poisseuse.

10. Article selon la revendication 9, dans lequel le substrat comprend un support de ruban, l'article comprend un ruban, et le ruban a une adhérence mesurée par pelage à température ambiante telle que mesurée en utilisant une version modifiée du procédé d'essai ASTM D 3330-90 avec un substrat de polypropylène, d'au moins 10 Newtons/décimètre.
